# EUROPEAN PATENT SPECIFICATION

(11) **EP 2 047 167 B1**
(45) Date of publication and mention of the grant of the patent: **13.10.2010**
(21) Application number: 07734090.9
(22) Date of filing: 19.03.2007
(51) Int. Cl.: F16L 21/04, F16L 21/06

(54) **NON-SLIP DEVICE FOR USE WITH MECHANICALLY-LOCKING FLEXIBLE COUPLINGS, AND RELATED COUPLING**
ANTIRUTSCHVORRICHTUNG ZUR VERWENDUNG MIT MECHANISCH VERRIEGELBAREN FLEXIBLEN KUPPLUNGEN UND VERWANDTE KUPPLUNG
DISPOSITIF ANTIDÉRAPANT À UTILISER AVEC DES RACCORDS SOUPLES DE VERROUILLAGE MÉCANIQUE, ET RACCORD ASSOCIÉ

(30) Priority: 18.07.2006 IT VI20060228
(43) Date of publication of application: 15.04.2009
(73) Proprietor: S.a.pro. S.r.l., 36013 Piovene Rocchette (VI) (IT)
(72) Inventor: CELADON, Giampietro, I-36031 Dueville (VI) (IT)
(74) Representative: Ziliotto, Tiziano
(86) International application number: PCT/IB2007/000763
(87) International publication number: WO 2008/010030

(56) References cited:
- EP-A2- 1 281 907
- GB-A- 831 294
- US-A- 4 779 900
- US-B1- 6 371 530

## Description

The present invention concerns couplings for pressurized lines.

In particular, the present invention concerns mechanically-locking flexible couplings for metal pipes. More precisely, the present invention concerns a non-slip device for use with mechanically-locking flexible couplings for pipe fittings and pipes in cast iron, particularly nodular cast iron, and a related coupling.

In the field of hydraulics, thermohydraulics and fluid transport in general, nodular cast iron pipes are used to carry out lines suitable for transporting and distributing water, gas and other pressurized liquid or gaseous fluids. Connection systems used for connecting pipes during laying and setting at work are also known.

Some of these connection systems use devices that are commonly called couplings.

Said couplings must comply with some essential requisites, in particular they must ensure perfect water-tightness over their entire operating life and must be resistant to the slipping action due to a longitudinal stress present in the line.

A type of coupling that is widely used is the so-called mechanically-locking flexible coupling.

According to a known embodiment of this coupling, a suitable portion of a male end of a tubular element is inserted coaxially inside a female end of another tubular element to be connected to the first one.

The two elements generally consist of pipes, pipe fittings or adapters having various shapes.

The female end, called bell end or simply bell by the experts, has a flared shape, suited to house the male end and an annular flange.

The coupling also comprises an annular seal in elastomer, which sometimes is suited to be housed in a seat created in the inner wall of the bell, and an annular element provided with a counter flange and suited to be externally coupled to the male tubular element at the level of its end.

The counter flange is provided with through holes, each one of which is suitable for receiving a threaded end of a corresponding hook-shaped anchoring element suited to engage with the outer part of the bell.

To install the coupling it is necessary to couple the first pipe to the bell axially after positioning the seal and to arrange the anchoring elements so that they engage on one side with the corresponding hole and on the other side with the shaped edge of the external part of the bell.

Finally, the operator provides for applying the nuts to the threaded ends of the anchoring elements, properly tightening them, usually with a torque wrench.

In this way, the annular element and in particular its annular edge is fitted between the pipe and the bell, compressing and elastically deforming the seal so that it adheres to the walls of the corresponding seat in the bell, thus ensuring the water-tightness of the coupling.

A drawback posed by this type of coupling is constituted by the fact that it does not guarantee resistance to longitudinal stress and therefore, in particular in the presence of high pressure, the male end of the pipe may slip off the bell.

As a consequence of the above, in individual points of the lines, like for example angular deviations, where said couplings are employed, anchoring blocks must be provided, made of concrete or another material capable of transferring the thrust force of the fluid to the surrounding ground.

This method, however, cannot be always applied, owing for example to the non optimal characteristics of the ground, to the limited space available, to the overall dimensions of the pipes, to the use of overground pipes, to the cost and time required for installing said blocks.

Examples of prior art "non-slip" devices can be found in each of documents US-B1-6371530. EP-A2-1281907. US-A-4779900 and GB B31294A.

The aim of the present invention is to overcome all the drawbacks described.

In particular, it is one object of the present invention to carry out a non-slip device for use with flexible couplings, preferably mechanically-locking couplings, for high-pressure lines in cast iron, particularly nodular cast iron, and a related coupling.

It is another aim of the invention to carry out a device that can be applied to mechanically-locking flexible couplings during installation of pressurized fluid transport systems.

It is a further aim of the invention to cany out a device that can be applied to the mechanically-locking flexible couplings of already existing systems.

It is another aim of the invention to carry out a device that can be applied to the mechanically-locking flexible couplings of existing systems with no need to remove the coupling and/or replace the pipe fittings.

It is another aim of the invention to carry out a device capable of ensuring that the coupling to which it is applied will be perfectly resistant to longitudinal thrust forces.

It is another aim of the invention to carry out a device capable of ensuring that the coupling to which it is applied will be perfectly watertight.

It is another aim of the invention to carry out a device that, once applied to the coupling for which it is intended, will not modify the functions and properties of said coupling.

It is another, yet not the least aim of the invention to carry out a device that is economical, easy to use and to assemble and suitable for mass production.

The aims described above have been achieved through the construction of a non-slip device for use with mechanically-locking flexible couplings and of a related coupling, characterized according to the corresponding independent claims. Advantageous embodiments of the invention are the subject of the dependent claims.

The solution proposed advantageously makes it possible to carry out a simple non-slip device, comprising a reduced number of components.

Still advantageously, the proposed solution makes it possible to carry out a device that can be rapidly applied.

Still advantageously, the proposed solution makes it possible to carry out a device whose installation does not require the use of specialized personnel and/or special equipment.

Still advantageously, the proposed solution makes it possible to carry out a device that can be easily removed from the coupling to which it is applied for replacement following damage and/or wear.

Still advantageously, the proposed solution makes it possible to carry out a device that ensures the perfect alignment of the pipe connected to the bell, guaranteeing the angular deviations required by the coupling.

Still advantageously, the proposed solution makes it possible to carry out a device that can be removed and re-assembled without affecting its non-slip characteristics.

Still advantageously, the proposed solution makes it possible to carry out a device that can be applied to all mechanically-locking flexible couplings for standardised nodular cast iron pipes in compliance with the standards and in particular with the UNI 9164 standard.

The aims and advantages described above will be highlighted in greater detail in the descriptions of some preferred embodiments of the invention, supplied as examples without limitation, with reference to the attached drawings, wherein:
- Figure 1 shows an exploded perspective view of a non-slip device carried out according to the invention;
- Figure 2 is an exploded perspective view of the device shown in Figure 1 and of a coupling to which it can be applied;
- Figure 3 is a perspective view of the device shown in Figure 1 applied to a coupling;

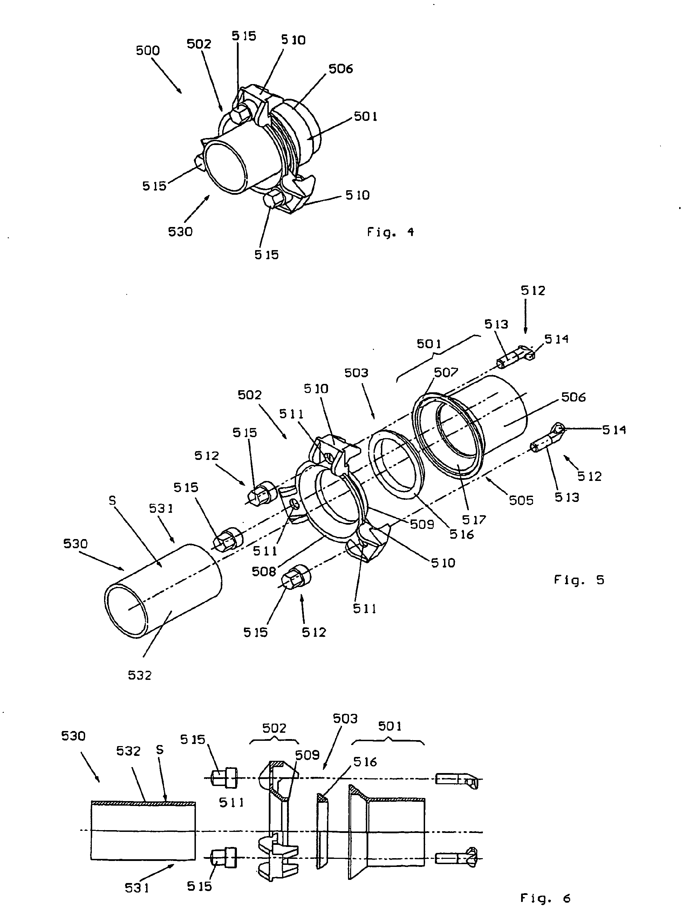

- Figure 4 is a perspective view of an example of a hydraulic coupling to which a device carried out according to the invention can be applied;
- Figure 5 is an exploded perspective view of the coupling shown in Figure 4;
- Figure 6 shows a longitudinal cross-section exploded view of the coupling shown in Figure 4;
- Figure 7 shows a perspective view of another example of a non-slip device carried out according to the invention;
- Figure 8 is an exploded perspective view of the device shown in Figure 7;
- Figure 9 shows two perspective views of an element of the device shown in Figure 7;
- Figures from 10 to 12 show each a perspective view of the various steps to be performed when applying the device shown in Figure 7 to a coupling of the type shown in Figure 4;
- Figure 13 shows a partial longitudinal cross section of the device and of the coupling shown in Figure 12.

First of all it is important to point out that corresponding components in different examples of embodiments are indicated by the same reference numbers.

The position indications given in the different examples of embodiment should be transferred to the new position.

The non-slip device that is the subject of the invention can be applied to the couplings of hydraulic lines and in particular to mechanically-locking flexible couplings for pressurized lines, preferably mechanically-locking flexible couplings comprising cast iron, more precisely nodular cast iron pipes.

It is clear that the same device can also be applied to pressurized lines comprising pipes and lines made of other preferably metallic materials.

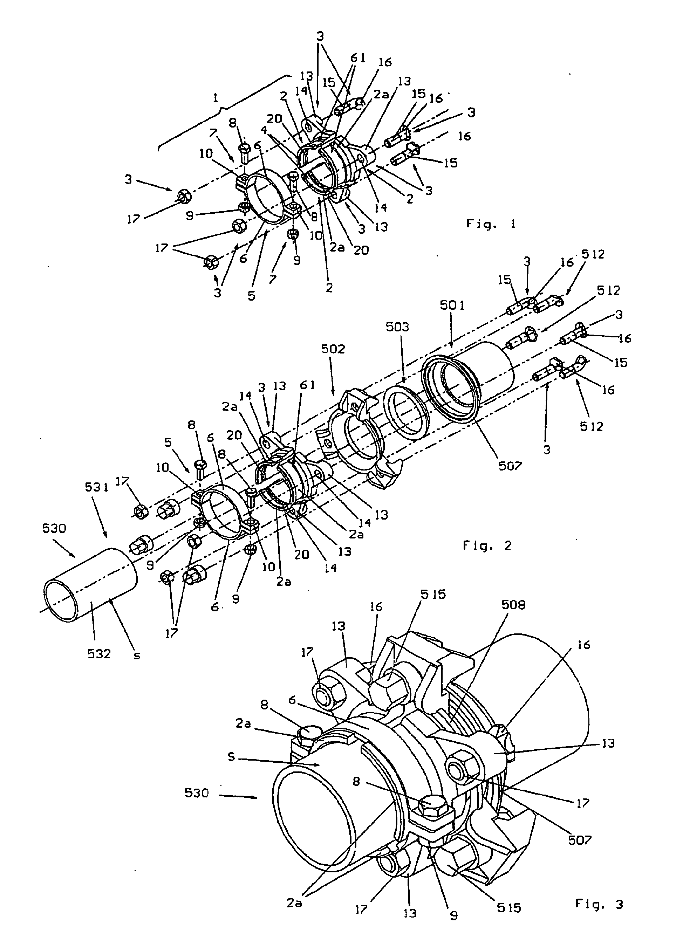

A non-limiting example of embodiment of a non-slip device subject of the present invention is represented in Figure 1, where it is indicated as a whole by 1. As already explained, it is particularly suitable for application to a preferably flexible coupling, as shown in detail in Figures 2 and 3, and more particularly to a flexible coupling of the type that locks mechanically.

This type of coupling, shown in detail in Figures from 4 to 6, where it is indicated as a whole by 500, comprises a first tubular element 501, a second tubular element 530, a hydraulic sealing element, indicated by 503, suited to be interposed between the above mentioned tubular elements 501 and 530, and a thrust element 502 cooperating with said sealing element 503.

The first tubular element 501 has a female end 505 in the shape of a bell, suited to coaxially receive at least one portion of one end 531 of the second male tubular element 530 constituted by a pipe 532 in the non-limiting example. More particularly, the first tubular element 501 comprises a section of a line 506, in the example consisting of a fitting, that has a preferably annular edge 507 or a flange on the outside, in the vicinity of the bell end 505.

It is clear that in general the tubular elements 530 and 501 may comprise to pipes and/or lines and/or pipe fittings and/or adapters having various shapes and characteristics and/or combinations thereof.

In the non-limiting embodiment of the invention illustrated, the thrust element 502 comprises an annular element 508, substantially in the shape of a truncated cone, suited to be externally coupled to the pipe 532 at the level of the end 531 and having one edge 509 suited to cooperate with the sealing element 503.

The annular element 508 is also provided with at least one counter flange 510 provided with through holes 511, each suited to receive a corresponding anchoring element 512 comprising a screw 513 with hook-shaped head 514 suited to engage with the edge 507 of the first element 501 and a corresponding nut 515.

The sealing element 503 comprises an annular seal 516 preferably made of elastomer, suited to be externally coupled to the pipe 532, preferably in the vicinity of its end 531.

According to some embodiments of the invention, on the inner wall 517 of the bell-shaped portion of the first tubular element 501 there is an annular seat suited to house the sealing element 503.

The non-slip device 1 suitable for connection to a coupling 500, shown in detail in Figures 1, 2 and 3, comprises at least one element 2, provided with means 3 suitable for fixing the coupling 500 itself to one of the tubular elements 530, 501, and gripping means 4 suited to be placed in contact with at least one part of the external surface S of the other one of the tubular elements 530 and 501 of the coupling 500.

Said at least one element 2 can be preferably fixed to the female first tubular element 501 and the gripping means 4 are suited to be placed in contact with at least one part of the external surface S of the male second tubular element 530. The device 1 also comprises adjustable means 5 suited to force the gripping means 4 against the surface S to activate them and make the element 2 integral with the pipe 532.

More particularly, in the non-limiting preferred embodiment of the invention shown in Figure 1, the device 1 comprises three elements 2 constituted by as many arcs of a circle 2a suited to be positioned side by side to form, as will be better illustrated below, a collar that substantially surrounds the entire surface of the second tubular element 530 of the coupling 500.

The means 5 comprise a clamp provided with clamping members 7.

More particularly, the clamp comprises two shaped jaws 6 suited to cooperate with each element 2 and the clamping members 7 comprise a pair of screws 8 with corresponding nuts 9 suited to be housed in through holes 10 made in the ends of each jaw 6.

This advantageously allows the operator, as will be better explained below, to act on each nut 9 to force each element 2 against the surface S of the pipe 530 in such a way as to activate the gripping means 4.

As regards the means 3 for fixing to the coupling 500, in the non-limiting preferred embodiment of the invention illustrated in Figures 1 and 2 they comprise fixing wings 13 provided with through holes 14 suited to receive connection members preferably comprising one anchoring screw 15 with a corresponding nut 17 having a hook-shaped head 16 suited to engage with one part of the coupling 500 and more particularly with the flange 507 of the first tubular element 501, as shown in Figure 3.

The wings 13 develop on a transverse plane, more precisely orthogonal to the longitudinal axis of the pipe 532 to which the elements 2 must be applied.

As regards the gripping means 4, visible in particular in Figures 1 and 3, they are suited to be placed in contact with and penetrate the external surface S of the pipe 532, in such a way as to make the device 1 integral with the pipe 532.

In the non-limiting preferred embodiment of the invention illustrated herein, said means 3 comprise at least one tooth 20 belonging to an insert housed in a seat created in each arc of a circle 2a. This solution advantageously makes it possible to make the arcs 2a and the teeth 20 also with different materials, having characteristics that are more suitable for the functions performed. More particularly, according to a preferred embodiment of the invention each arc 2a is made of cast iron and each insert is preferably made of hardened and/or nitrided steel.

A further embodiment of the device that is the subject of the invention, indicated as a whole by 100 in Figures from 7 to 9, is differentiated from the previous one due to the fact that the means 5 comprise three threaded elements 21 with corresponding pairs of nuts 22, each one suited to be housed in corresponding holes or slots 23 created in corresponding walls 24 of each arc 2b.

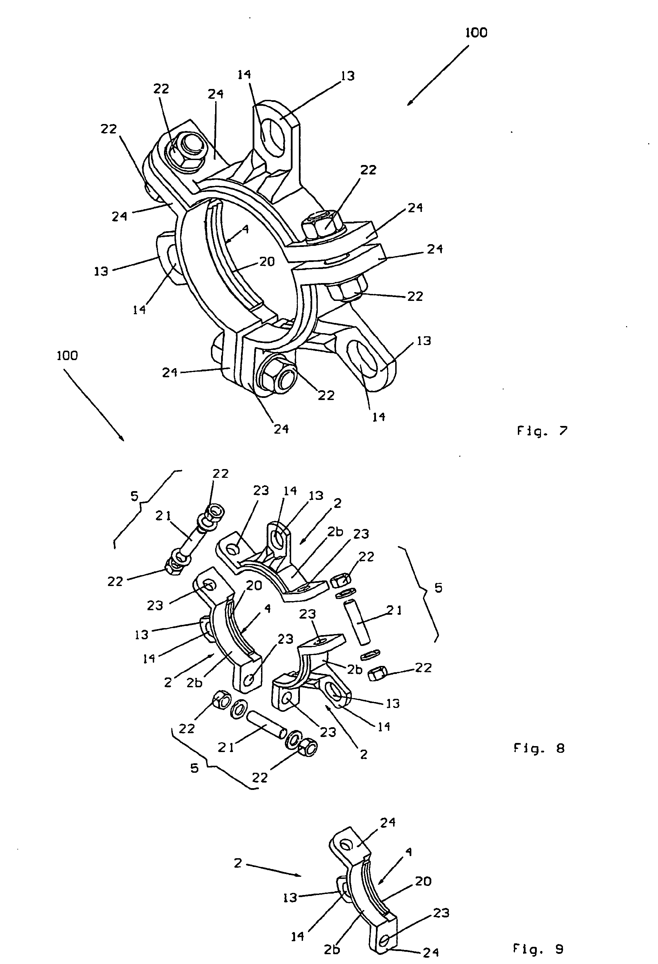

More particularly, said walls 24 are preferably created at the level of each one of the two ends of the elements 2 so that, when they are arranged on the external surface of the pipe 532 in operating position, they face each other in pairs, as shown in detail in Figure 7, so that the holes 23 face each other and are substantially coaxial.

This advantageously allows the operator, as will be better explained below, to act on each nut 22 to adjust the mutual distance between the arcs 2b forcing each element 2 against the pipe 532, in such a way as to activate the gripping means 4. According to this solution the elements 2 also act as jaws, thus making it possible to advantageously reduce the number of components of the non-slip device 100 that is the subject of the invention, reducing its construction costs and simplifying its installation procedures.

The preferred embodiment of the invention represented in Figures 7, 8 and 9 is differentiated from the previous one also due to the fact that the wings 13 and the corresponding through holes 14 are in angular position at the level of each anchoring screw 514 of the coupling 500.

This solution advantageously allows the locking screws of the coupling to be used to fix the device 1 to the coupling 500, thus further reducing the number of components of the device 100, making it easier to construct and lowering construction costs.

Each through hole 14, furthermore, is preferably shaped as a slot in order to advantageously allow the non-slip device 100 to be applied to a wide variety of couplings that are differentiated according to the distance between the anchoring screws (distance between axes).

More generally, always according to the invention, the non-slip device comprises a number of elements 2 equal to the number of anchoring elements 512 of the coupling to which it must be applied.

This allows the number of components or parts of the device to be reduced, maximizing the anchorage points to the coupling to which it must be applied. According to other embodiments of the invention, which are not represented herein for the sake of brevity, the elements 2 are connected to each other through articulation members, in such a way as to form a preferably open and/or openable element to allow application to the tubular element 532 even when this is working. More particularly, said articulation members must preferably ensure a mutual movement of the elements 2, such as to allow the means to force each element 2 against the external surface S of the pipe 532 and can for example consist of pins or hinges.

According to the envisaged procedure for installing the non-slip device shown in Figure 1, the operator positions the elements 2 on the pipe 532 of the coupling 500 and then proceeds to apply the means 5 arranging the jaws 6 on the apposite seats 61 made in the elements 2, as shown in Figures 2 and 3.

Successively the operator tightens the nuts 9 of the clamp in order to force the elements 2 against the surface S of the pipe 532.

During this operation the gripping means 4 interfere with the surface S and penetrate it, making the elements 2 integral with the pipe 532 and fixing them onto it.

In a successive step the operator positions the anchorage screws 15 in the corresponding holes 14, engaging the shaped head 16 on the flange 507 of the coupling 500.

Finally, the operator applies each nut 17 to the corresponding anchoring screw 15 fixing the non-slip device 1 to the coupling 500 and obtaining the desired mechanical resistance and consequently avoiding any slipping movement.

The above clearly shows that the device can be applied both during installation of the device 500 and to an already existing joint. This is due to the special shape of the means and of the element 2.

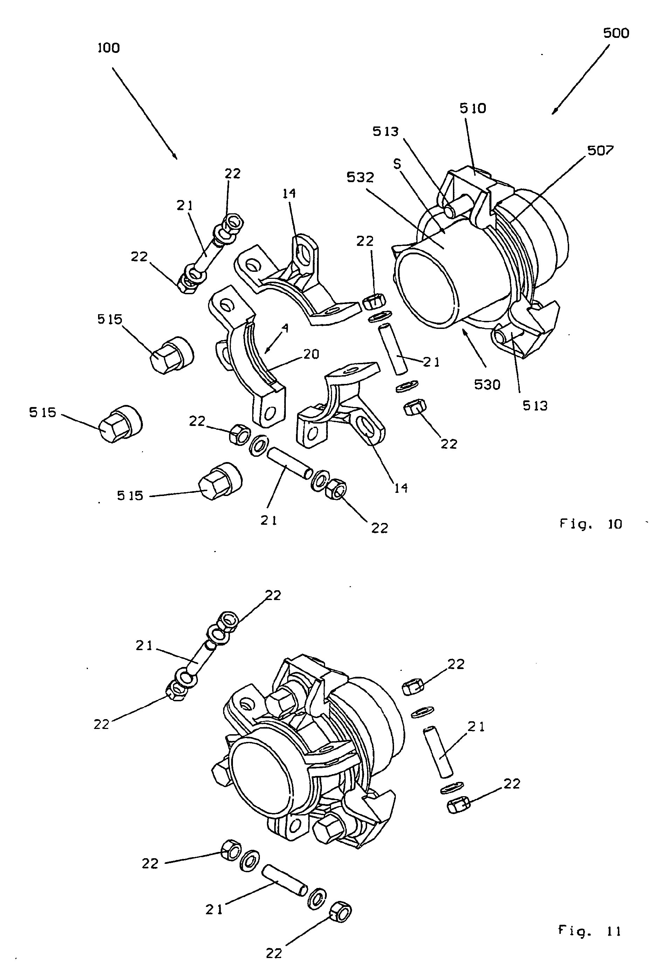

According to the procedure for installing the non-slip device indicated by 100 in Figures 7 and 8, while preparing the coupling 500 the operator, before fixing the coupling with the nuts 515, applies the arcs 2b to the pipe 532, as shown in particular in Figures 10 and 11, in such a way as to form a collar, paying attention to match and align the screws 513 with the holes 14, successively applying the corresponding nuts 515 to said screws.

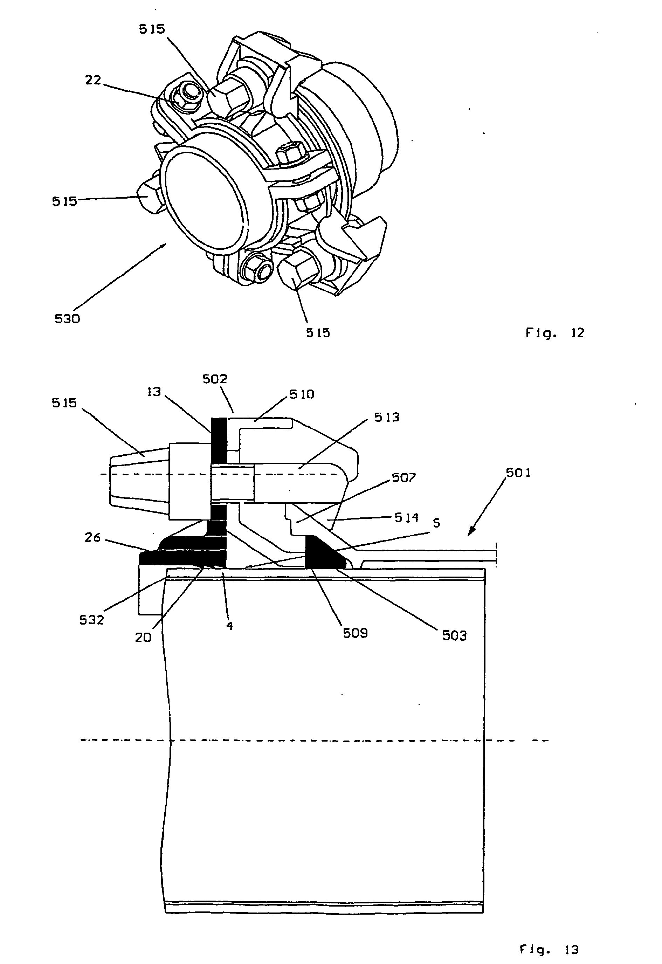

Successively the operator positions the screws 21 in the corresponding holes 23 and tightens the nuts 22 in such a way as to clamp the collar, forcing the elements 2b against the surface S of the pipe 532, as shown in Figure 12.

During this operation the gripping means 4 penetrate the surface S of the pipe 532, as shown in particular in Figure 13, in a manner analogous to the manner previously described.

In a successive step the operator inserts the anchoring screws 512 inside the corresponding holes 511 of the thrust element 502 of the coupling 500 and of the corresponding holes 10 of each element 2 of the device, engaging each head with the annular edge of the first tubular element 501 of the coupling 500.

Successively the operator tightens the nuts 515 definitively, at the same time fixing the non-slip device 1 to the coupling and pushing the edge 509 of the thrust element 502 against the sealing element 503, thus making the coupling 500 watertight.

According to the procedure for applying the non-slip device 100 to an already existing coupling 500, the operator withdraws the nuts 515 and creates the situation illustrated in Figure 10, then proceeds as described above.

It is worth noting that all the nut tightening operations can advantageously be carried out with the aid of torque wrenches that ensure control of the forces acting on the various mechanical members.

It should also be observed that, advantageously, the non-slip device, once applied to the coupling, does not modify its structure and therefore leaves its functions and properties unchanged.

Still advantageously, the non-slip device proposed can be removed and re-assembled several timers, without affecting its non-slip function.

Advantageously the non-slip device proposed can be applied also to standardized mechanically-locking flexible couplings in compliance with the UNI 9164 standard.

Even though the invention has been described with reference to the enclosed drawings, upon implementation certain modifications may be made, which are all included in the inventive concept expressed in the following claims and are therefore protected by same.

It is also important to remember that when the details mentioned in the claims below are followed by references, these must be understood as an aid to improve the comprehensibility of the claim in question and not as a limit to the interpretation of the same.

## Claims

1. Non-slip device (1, 100) for use with flexible couplings 500 comprising anchoring elements (512), said device comprising at least one element (2) provided with means (3) for fixing said coupling (500) to a first tubular element (501) and gripping means (4) suited to be placed in contact with at least one part of the external surface (S) of a second tubular element (530) of said coupling (500), said device also comprising means (5) suited to force said gripping means (4) against said surface (S) in order to make said at least one element (2) integral with said second tubular element (530) and guarantee the said mechanical resistance; **characterized in that** it comprises at least two elements (2) each comprising a arc of a circle (2a), said at least two arcs of a circle comprising said gripping means 4 and being suited to be positioned side by side to substantially surround the whole surface (S) of said second tubular element (530) so as to place said gripping means 4 in contact with at least one part of said surface S and **in that** said means (5) comprise at least one clamp provided with clamping members(7), with said at least one clamp being adapted to cooperate with said arcs of a circle so as to force said gripping means (4) to penetrate said surface S.

2. Non-slip device (1, 100) according to claim 1), **characterized in that** said at least one clamp comprises at least two shaped jaws (6).

3. Non-slip device (1, 100) according to one of claims 1) and 2), **characterized in that** said clamping members (7) comprise at least two screws (8) with at least two corresponding nuts (9), said screws being suited to be housed in corresponding through holes (10) present in each jaw (6).

4. Non-slip device (1, 100) according to any of the previous claims, **characterized in that** said fixing means (3) comprise fixing wings (13) provided with through holes (14) suited to receive connection members preferably comprising one anchoring screw (15) with a corresponding nut (17).

5. Non-slip device (1, 100) according to claim 4), **characterized in that** said screw comprises a shaped head (16) suited to engage with a part of said coupling (500).

6. Non-slip device (1, 100) according to one of claims 4) or 5), **characterized in that** said wings (13) develop on a plane that is transverse or orthogonal to the longitudinal axis of said second tubular element (530).

7. Non-slip device (1, 100) according to any of the previous claims, **characterized in that** said gripping means (4) comprise at least one tooth (20) adapted to penetrate said surface S.

8. Non-slip device (1, 100) according to claim 7), **characterized in that** said at least one tooth (20) belongs to an insert.

9. Non-slip device (1, 100) according to claim 8), **characterized in that** said insert (13) is preferably made of hardened and/or nitrided steel.

10. Non-slip device (1, 100) according to any of the previous claims, **characterized in that** said at least one element (2) is made of cast iron.

11. Non-slip device (1, 100) according to any of the previous claims, **characterized in that** it comprises a number of elements (2) equal to the number of anchoring elements (512) of said coupling (500).

12. Non-slip device (1, 100) according to one of claims 1 to 11, **characterized in that** said at least two elements (2) are connected to each other through articulation members.

13. Non-slip device (1, 100) according to claim 12), **characterized in that** said articulation members comprise pins or hinges.

14. Non-slip device (1, 100) according to any of the claims 1 and 2, **characterized in that** said means (5) comprise at least two threaded elements (21) with at least two corresponding nuts (22), said threaded elements (21) being suited to be housed in corresponding holes or slots (23) made in each of said two arcs (2b).

15. Non-slip device (1, 100) according to any of the previous claims, **characterized in that** said first tubular element (501) is the female element of said coupling (500).

16. Mechanically-locking flexible coupling (500) comprising:
- a first tubular element (501) having a female end (505) suited to house at least one portion of one end (531) of a second tubular element (530);
- tubular element (530); a thrust element (502) suited to be externally coupled to said second
- a hydraulic sealing element (503) suited to be interposed between said tubular elements (501, 502);
said thrust element (502) having one edge (509) suited to cooperate with said hydraulic sealing element (503), **characterized in that** it also comprises a non- slip device (1, 100) according to any of the previous claims.

17. Coupling according to claim 16), **characterized in that** the anchoring elements (512) of said coupling (500) and the fixing means (3) of said device comprise at least one screw suited to fix said device to said coupling in order to guarantee its mechanical resistance and to force said edge against said sealing element to guarantee its water-tightness.

18. Coupling according to claim 16) or 17), **characterized in that** said first tubular element (501) comprises a tubular element (506) having the female end (505) in the shape of a bell, in the vicinity of which there is an annular edge (507) or a flange.

19. Coupling according to one of claims 16 to 18, **characterized in that** said thrust element (502) comprises an annular element (508), substantially in the shape of a truncated cone having at least one through hole (511) suited to receive a corresponding anchoring element (512) comprising a screw (513) having a hook-shaped head (514) suited to engage with a flange (507) of said first element (501) and a corresponding nut (515).

20. Coupling according to one of claims 16 to 19, **characterized in that** said sealing element (503) comprises a seal (516).

## Patentansprüche

1. Anti-Rutsch-Vornchtung (1, 100) zur Verwendung an elastischen Kupplungen (500), Verankerungselemente (512) umfassend, wobei besagte Vorrichtung wenigstens ein Element (2) mit Mitteln (3) zur Befestigung besagter Kupplung (500) an ein erstes, röhrenförmiges Element (501) umfasst, und Spannmittel (4), die geeignet sind, mit wenigstens einem Teil der Außenfläche (S) eines zweiten, röhrenförmigen Elements (530) besagter Kupplung (500) in Kontakt gebracht zu werden, wobei besagte Vorrichtung außerdem Mittel (5) umfasst, die geeignet sind, besagte Spannmittel (4) gegen besagte Fläche (S) zu forcieren, um das besagte, wenigstens eine Element (2) fest mit besagtem, zweiten röhrenförmigen Element (530) zu verbinden und besagte mechanische Festigkeit zu gewährleisten, **dadurch gekennzeichnet, dass** sie wenigstens zwei Elemente (2) umfasst, die jeweils einen Kreisbogen (2a) umfassen, wobei die besagten, wenigstens zwei Kreisbogen die besagten Spannmittel (4) umfassen und geeignet sind, nebeneinander positioniert zu werden, um im Wesentlichen die gesamte Fläche (S) des besagten zweiten röhrenförmigen Elements (530) zu umschließen, um besagte Spannmittel (4) in Kontakt mit wenigstens einem Teil besagter Fläche (S) zu platzieren, und **dadurch gekennzeichnet, dass** besagte Mittel (5) wenigstens eine Klemmmittel (7) aufweisende Klemme umfassen, wobei diese wenigstens eine Klemme geeignet ist, mit den Kreisbögen zusammenzuwirken, um besagte Spannmittel (4) zu forcieren, die Fläche (S) zu durchdringen.

2. Anti-Rutsch-Vorrichtung (1, 100) gemäß Patentanspruch 1, **dadurch gekennzeichnet, dass** die besagte wenigstens eine Klemme wenigstens zwei geformte Klemmbacken (6) aufweist.

3. Anti-Rutsch-Vorrichtung (1, 100) gemäß Patentanspruch 1 oder 2, **dadurch gekennzeichnet, dass** die besagten Klemmmittel (7) wenigstens zwei Schrauben (8) mit wenigstens zwei zugehörigen Muttern (9) umfassen, wobei besagte Schrauben geeignet sind, in entsprechende, in jeder Klemmbacke (6) vorhandene Durchgangsbohrungen (10) eingefügt zu werden.

4. Anti-Rutsch-Vorrichtung (1, 100) gemäß eines jeden der vorstehenden Patentansprüche, **dadurch gekennzeichnet, dass** die besagten Befestigungsmittel (3) Befestigungs-flügel (13) mit Durchgangsbohrungen (14) umfassen, die geeignet sind, Verbindungsmittel aufzunehmen, die vorzugsweise eine Verankerungs-schraube (15) mit einer zugehörigen Mutter (17) umfassen.

5. Anti-Rutsch-Vorrichtung (1, 100) gemäß Patentanspruch 4, **dadurch gekennzeichnet, dass** die besagte Schraube einen geformten Kopf (16) aufweist, der geeignet ist, in einen Teil der Kupplung (500) einzurasten.

6. Anti-Rutsch-Vorrichtung (1, 100) gemäß Patentanspruch 4 oder 5, **dadurch gekennzeichnet, dass** die besagten Flügel (13) sich über eine schräg oder rechtwinklig zur Längsachse des besagten zweiten röhrenförmigen Elements (530) verlaufenden Ebene erstrecken.

7. Anti-Rutsch-Vorrichtung (1, 100) gemäß eines jeden der vorstehenden Patentansprüche, **dadurch gekennzeichnet, dass** die besagten Spannmittel (4) wenigstens einen Zahn (20) umfassen, der geeignet ist, in besagte Fläche (S) einzudringen.

8. Anti-Rutsch-Vorrichtung (1, 100) gemäß Patentanspruch 7), **dadurch gekennzeichnet, dass** der besagte wenigstens eine Zahn zu einem Einsatzstück gehört.

9. Anti-Rutsch-Vorrichtung (1, 100) gemäß Patentanspruch 8, **dadurch gekennzeichnet, dass** das besagte Einsatzstück (13) vorzugsweise aus gehärtetem und/oder aus nitriergehärtetem Stahl besteht.

10. Anti-Rutsch-Vorrichtung (1, 100) gemäß eines jeden der vorstehenden Patentansprüche, **dadurch gekennzeichnet, dass** das besagte wenigstens eine Element (2) aus Gusseisen besteht.

11. Anti-Rutsch-Vorrichtung (1, 100) gemäß eines jeden der vorstehenden Patentansprüche, **dadurch gekennzeichnet, dass** sie eine Anzahl von Elementen (2) umfasst, die der Anzahl der Verankerungselemente (512) der besagten Kupplung (500) entspricht.

12. Anti-Rutsch-Vorrichtung (1, 100) gemäß eines jeden der Patentansprüche von 1 bis 11, **dadurch gekennzeichnet, dass** die besagten wenigstens zwei Elemente (2) über Gelenkglieder miteinander verbunden sind.

13. Anti-Rutsch-Vorrichtung (1, 100) gemäß Patentanspruch 12), **dadurch gekennzeichnet, dass** die besagten Gelenkglieder Zapfen oder Scharniere umfassen.

14. Anti-Rutsch-Vorrichtung (1, 100) gemäß eines beliebigen der Patentansprüche 1 und 2, **dadurch gekennzeichnet, dass** die besagten Mittel (5) wenigstens zwei Elemente mit Gewinde (21) mit jeweils wenigstens zwei zugehörigen Muttern (22) umfassen, wobei besagte Elemente mit Gewinde (21) geeignet sind, in entsprechenden Bohrungen oder Langlöchern (23) in jedem der zwei Bögen (2b) aufgenommen zu werden.

15. Anti-Rutsch-Vorrichtung (1, 100) gemäß eines jeden der vorstehenden Patentansprüche, **dadurch gekennzeichnet, dass** das besagte erste röhrenförmige Element (501) das weibliche Element der besagten Kupplung (500) ist.

16. Mechanisch blockierende, elastische Kupplung (500), Folgendes umfassend:
- ein erstes, röhrenförmiges Element (501) mit einem weiblichen Ende (505), das geeignet ist, wenigstens einen Abschnitt eines Endes (531) eines zweiten, röhrenförmigen Elements (530) aufzunehmen;
- ein Schubelement (502), das geeignet ist, extern an besagtem zweiten röhrenförmigen Element (530) angekuppelt zu werden;
- ein hydraulisches Dichtelement (503), dazu geeignet, zwischen den besagten röhrenförmigen Elementen (501, 502) eingefügt zu werden;
wobei das besagte Schubelement (502) eine Kante (509) aufweist, die geeignet ist, mit besagtem hydraulischen Dichtelement (503) zusammenzuwirken, **dadurch gekennzeichnet, dass** sie außerdem eine Anti-Rutsch-Vorrichtung (1, 100) gemäß eines jeden der vorstehenden Patentansprüche umfasst.

17. Kupplung gemäß Patentanspruch 16, **dadurch gekennzeichnet, dass** die Verankerungselemente (512) besagter Kupplung (500) und die Befestigungsmittel (3) besagter Vorrichtung wenigstens eine Schraube umfassen, die geeignet ist, besagte Vorrichtung an besagter Kupplung zu befestigen, um ihre mechanische Festigkeit zu gewährleisten und um die besagte Kante gegen das besagte Dichtelement zu forcieren, um seine Wasserdichtigkeit zu garantieren.

18. Kupplung gemäß Patentanspruch 16 oder 17, **dadurch gekennzeichnet, dass** das besagte erste röhrenförmige Element (501) ein röhrenförmiges Element (506) mit dem weiblichen Ende (505) in Glockenform umfasst, in dessen Nähe sich eine ringförmige Kante (507) oder ein Flansch befindet.

19. Kupplung gemäß eines der Patentansprüche von 16 bis 18, **dadurch gekennzeichnet, dass** das besagte Schubelement (502) ein ringförmiges Element (508) umfasst, das im Wesentlichen kegelstumpfförmig ist und wenigstens eine Durchgangsbohrung (511) aufweist, die geeignet ist, ein entsprechendes Verankerungselement (512) aufzunehmen, das eine Schraube (513) mit einem hakenförmigen Kopf (514) umfasst, welcher geeignet ist, in einen Flansch (507) des besagten, ersten Elements (501) einzurasten, sowie eine zugehörige Mutter (515).

20. Kupplung gemäß eines der Patentansprüche von 16 bis 19, **dadurch gekennzeichnet, dass** das besagte Dichtelement (503) eine Dichtung (516) umfasst.

## Revendications

1. Dispositif anti-extraction (1, 100) pour l'emploi avec des raccordements flexibles (500) comprenant des éléments d'ancrage (512), ledit dispositif comprenant au moins un élément (2) muni de moyens de fixation (3) dudit raccordement (500) à un premier élément tubulaire (501) et des moyens d'accrochage (4) aptes à être mis en contact avec au moins une partie de la surface extérieure (S) d'un deuxième élément tubulaire (530) dudit raccordement (500), ledit dispositif comprenant également des moyens (5) aptes à forcer lesdits moyens d'accrochage (4) contre ladite surface (S) de manière à rendre ledit au moins un élément (2) solidaire dudit deuxième élément tubulaire (530) et à garantir ladite résistance mécanique ; **caractérisé en ce qu'**il comprend au moins deux éléments (2), chacun comprenant un secteur circulaire (2a), lesdits au moins deux secteurs circulaires comprenant lesdits moyens d'accrochage (4) et étant indiqués à être positionnés l'un à côté de l'autre pour entourer essentiellement la surface entière (S) dudit deuxième élément tubulaire (530) de façon à mettre lesdits moyens d'accrochage (4) en contact avec au moins une partie de ladite surface S et **en ce que** lesdits moyens (5) comprennent au moins un étrier muni d'élements de serrage (7), ledit au moins un étrier étant adapté à coopérer avec lesdits secteurs circulaires afin de forcer lesdits moyens d'accrochage (4) à pénétrer ladite surface S.

2. Dispositif anti-extraction (1, 100) selon la revendication 1), **caractérisé en ce que** ledit au moins un étrier comprend au moins deux mâchoires galbées (6).

3. Dispositif anti-extraction (1, 100) selon l'une des revendications 1) et 2), **caractérisé en ce que** lesdits éléments de serrage (7) comprennent au moins deux vis (8) avec au moins deux écrous correspondants (9), lesdites vis étant aptes à être logées dans des trous passants correspondants (10) se trouvant sur chaque mâchoire (6).

4. Dispositif anti-extraction (1, 100) selon l'une quelconque des revendications précédentes, **caractérisé en ce que** lesdits moyens de fixation (3) comprennent des ailes de fixation (13) munies de trous passants (14) aptes à recevoir des éléments de connexion comprenant préférablement une vis d'ancrage (15) avec un écrou correspondant (17).

5. Dispositif anti-extraction (1, 100) selon la revendication 4), **caractérisé en ce que** ladite vis comprend une tête galbée (16) apte à s'engager sur une partie dudit raccordement (500).

6. Dispositif anti-extraction (1, 100) selon l'une des revendications 4) ou 5), **caractérisé en ce que** lesdites ailes (13) se développent sur un plan transversal ou orthogonal à l'axe longitudinal dudit deuxième élément tubulaire (530).

7. Dispositif anti-extraction (1, 100) selon l'une quelconque des revendications précédentes, **caractérisé en ce que** lesdits moyens d'accrochage (4) comprennent au moins une dent (20) apte à pénétrer ladite surface S.

8. Dispositif anti-extraction (1, 100) selon la revendication 7), **caractérisé en ce que** ladite au moins une dent (20) appartient à une insertion.

9. Dispositif anti-extraction (1, 100) selon la revendication 8), **caractérisé en ce que** ladite insertion (13) est préférablement réalisée en acier trempé et/ou nitruré.

10. Dispositif anti-extraction (1, 100) selon l'une quelconque des revendications précédentes, **caractérisé en ce que** ledit au moins un élément (2) est réalisé en fonte.

11. Dispositif anti-extraction (1, 100) selon l'une quelconque des revendications précédentes, **caractérisé en ce qu'**il comprend un nombre d'éléments (2) égal au nombre d'éléments d'ancrage (512) dudit raccordement (500).

12. Dispositif anti-extraction (1, 100) selon l'une des revendications de 1) à 11), **caractérisé en ce que** lesdits au moins deux éléments (2) sont reliés l'un à l'autre au moyen d'éléments d'articulation.

13. Dispositif anti-extraction (1, 100) selon la revendication 12), **caractérisé en ce que** lesdits éléments d'articulation comprennent des pivots ou des charnières.

14. Dispositif anti-extraction (1, 100) selon l'une quelconque des revendications 1) et 2), **caractérisé en ce que** lesdits moyens (5) comprennent au moins deux éléments filetés (21) avec au moins deux étrous correspondants (22), lesdits éléments filetés (21) étant aptes à être logés dans des trous ou fentes correspndants (23) réalisés dans chacun desdits deux secteurs (2b).

15. Dispositif anti-extraction (1, 100) selon l'une quelconque des revendications précédentes, **caractérisé en ce que** ledit premier élément tubulaire (501) est l'élément femelle dudit raccordement (500).

16. Raccordement flexible à serrage mécanique(500) comprenant :
- un premier élément tubulaire (501) ayant une extrémité femelle (505) apte à loger au moins une partie d'une extrémité (531) d'un deuxième élément tubulaire (530) ;
- un élément de poussée (502) apte à être accouplé extérieurement avec ledit deuxième élément tubulaire (530) ;
- un élément d'étanchéité hydraulique (503) apte à être interposé entre lesdits éléments tubulaires (501, 502) ;
où ledit élément de poussée (502) ayant un bord (509) apte à coopérer avec ledit élément d'étanchéité hydraulique (503), **caractérisé en ce qu'**il comprend également un dispositif anti-extraction (1, 100) selon l'une quelconque des revendications précédentes.

17. Raccordement selon la revendication 16), **caractérisé en ce que** les éléments d'ancrage (512) dudit raccordement (500) et les moyens de fixation (3) dudit dispositif comprennent au moins une vis apte à fixer ledit dispositif audit raccordement de façon à garantir sa résistance mécanique et à forcer ledit bord contre ledit élément étanche afin de garantir son étanchéité hydraulique.

18. Raccordement selon les revendications 16 ou 17), **caractérisé en ce que** ledit premier élément tubulaire (501) comprend un élément tubulaire (506) ayant l'extrémité femelle (505) en forme d'une tulipe près de laquelle il y a un bord annulaire (507) ou une bride.

19. Raccordement selon l'une des revendications de 16) à 18), **caractérisé en ce que** ledit élément de poussée (502) comprend un élément annulaire (508) essentiellement en forme d'un tronc de cône ayant au moins un trou passant (511) apte à recevoir un élément d'ancrage correspondant (512) comprenant une vis (513) ayant une tête en forme de crochet (514) apte à s'engager avec une bride (507) dudit premier élément (501) et un écrou correspondant (515).

20. Raccordement selon l'une des revendications de 16) à 19), **caractérisé en ce que** ledit élément d'étanchéité (503) comprend un joint d'étanchéité (516).
